# EUROPÄISCHE PATENTSCHRIFT

(11) **EP 1 121 519 B1**
(45) Veröffentlichungstag und Bekanntmachung des Hinweises auf die Patenterteilung: **10.04.2002**
(21) Anmeldenummer: 99950565.4
(22) Anmeldetag: 29.09.1999
(51) Int. Cl.: F02D 41/02, F01N 7/00

(54) **VERFAHREN UND VORRICHTUNG ZUR DE-SULFATIERUNG EINES NOX-SPEICHERKATALYSATORS**
METHOD AND DEVICE FOR DESULFURIZING A NOx ACCUMULATING CATALYST SYSTEM
PROCEDE ET DISPOSITIF DE DESULFURATION D'UN CATALYSEUR A ACCUMULATION DE NOx

(30) Priorität: 16.10.1998 DE 19847875
(43) Veröffentlichungstag der Anmeldung: 08.08.2001
(73) Patentinhaber: Volkswagen Aktiengesellschaft, 38436 Wolfsburg (DE)
(72) Erfinder: POTT, Ekkehard, D-38518 Gifhorn (DE); SPLISTESER, Gunnar, D-38442 Wolfsburg (DE)
(86) Internationale Anmeldenummer: EP9907212
(87) Internationale Veröffentlichungsnummer: WO0023702

(56) Entgegenhaltungen:
- EP-A- 0 580 389
- EP-A- 0 636 770
- EP-A- 0 860 595
- EP-A- 0 862 941
- EP-A- 0 869 263
- WO-A-96/03571
- WO-A-98/27322
- GB-A- 2 324 052
- US-A- 4 747 264
- US-A- 5 758 493

## Beschreibung

Die vorliegende Erfindung betrifft ein Verfahren zur De-Sulfatierung einer einer mager betriebenen Brennkraftmaschine nachgeschalteten NOₓ-Speichers oder NOx-Speicherkatalysators. Sie betrifft zudem einen Common-Rail-Dieselmotor und eine einen NOₓ-Speicherkatalysator umfassende Abgasreinigungsvorrichtung zur Durchführung des Verfahrens.

NOx-Speicherkatalysatoren bestehen aus einer üblichen 3-Wege-Beschichtung, die um eine NOₓ-Speicherkomponente erweitert wird. Sie lagern Stickoxide durch Nitratbildung im mageren Abgas ein und setzen diese unter reduzierenden Bedingungen im fetten Abgas in unschädliches N₂ um.

Durch den im Kraftstoff enthaltenen Schwefel kommt es jedoch neben der erwünschten Nitratbildung an den katalytisch wirksamen Oberflächen stets auch zur unerwünschten Bildung stabiler Sulfate, die zu einer schleichenden Vergiftung des Katalysators führen und dessen NOₓ-Einlagerungsfähigkeit allmählich bis zur völligen Desaktivierung des Katalysators verringern. Im Unterschied zu einer Bleivergiftung bei 3-Wege-Katalysatoren ist eine solche Sulfatvergiftung eines NOₓ-Speicherkatalysators jedoch vollständig oder zumindest überwiegend reversibel, sofern hinreichend hohe Katalysatortemperaturen von etwas mehr als etwa 550 °C und ein hinreichend hohes Schadstoffangebot bei geringem Restsauerstoffgehalt vorliegen.

Bei NOx-Speicherkatalysatoren wird daher in der Praxis durch Einstellung einer geeigneten Temperatur und Absenkung des Sauerstoffgehaltes bis in den Fetten Betriebsbereich der Brennkraftmaschine, d.h. Verringerung des Lambda-Wertes auf weniger als 1, in periodischen Abständen eine Entschwefelung oder De-Sulfatierung durchgeführt.

Da Dieselmotoren üblicherweise nicht mit λ < 1 laufen, sind bei dieser Art von Brennkraftmaschinen besondere motorische Maßnahmen (u. a. Androsselung ohne Drehmomenteneinbruch) zur De-Sulfatierung erforderlich, die zu einer unerwünschten Veränderung des Fahrverhaltens führen können.

Aus der WO 98/27322 ist ein Verfahren zur De-Sulfatierung eines NOₓ-Speichers bekannt, bei dem der NOₓ-Speicher unter reduzierenden Bedingungen auf eine geeignete De-Sulfatierungstemperatur erhitzt und mittels einer dann einsetzenden exothermen Reaktion zwischen dem kraftstoffreichen Abgas und stromaufwärts eingespeisten zusätzlichen Sauerstoff von dem eingelagerten Schwefel befreit wird. Dem NOₓ-Speicher ist hierbei zur Temperaturüberwachung unter anderem jeweils ein Temperatursensor vor- bzw. nachgeschaltet. Die Verwendung einer vorgeschalteten Breitbandlambdasonde zur Bestimmung des Lambda-Wertes und/oder eines nachgeschalteten NOₓ-Sensors zur Bestimmung der NOₓ-Emission sind diesem Dokument nicht zu entnehmen.

Die US-PS-4,747,264 offenbart ein Verfahren zur automatischen Regeneration eines einem Dieselmotor nachgeschalteten Rußfilters durch Abbrennen der darin gespeicherten Rußpartikel, bei dem die erforderlichen hohen Abgastemperaturen zum Zünden der Rußpartikel durch Schließen einer vorgeschalteten Drosselklappe erzeugt werden. Zur Einleitung eines Regenerationsvorgangs müssen Meßwerte für die Drehzahl des Dieselmotors, den Gegendruck des Rußfilters und die Abgastemperatur vorgegebene Schwellenwerte überschreiten. Zur Vermeidung einer eventuellen thermischen Schädigung des Rußfilters wird die Drosselklappe auch bei Überschreitung eines bestimmten Temperaturniveaus automatisch geschlossen. Bei Volllast hingegen wird die Drosselklappe zur Vermeidung von Leistungseinbrüchen in geöffneter Stellung gehalten und eventuell erforderliche Regenerationen unterdrückt.

Die US-PS-5 771 685 offenbart ein Verfahren und eine Vorrichtung zur Onboard-Überwachung des Wirkungsgrades eines einer zugeordneten Brennkraftmaschine nachgeschalteten NOₓ-Speichers. Beim Absinken des Wirkungsgrades unter einen vorgegebenen Minimalwert wird die Magerbetriebszeit der Brennkraftmaschine verringert und bei Unterschreitung einer bestimmten minimalen Magerbetriebszeit durch Erhöhung der Abgastemperatur und Einstellung einer fetten Betriebsweise automatisch eine Entschwefelung des NOₓ-Speichers eingeleitet. Nähere Angaben über das verwendete Enschwefelungsverfahren sind der US-PS-5 771 685 jedoch nicht zu entnehmen.

Die europäische Patentanmeldung 0 869 263 offenbart ein Verfahren und eine Vorrichtung zur Aufrechterhaltung des Wirkungsgrades eines NOₓ-Speichers durch Bestimmung seiner Schwefelbeladung und automatische Durchführung einer Entschwefelung bei Überschreitung eines bestimmten Schwefelbeladungs-Schwellenwertes, ohne dass hierbei jedoch die Art und Weise dieses Entschwefelungsvorgangs näher beschrieben wird.

Die europäische Patentanmeldung 0 860 595 betrifft ein Verfahren und eine Vorrichtung zur Entschwefelung einer Stickoxidfalle im Abgassystem eines zugeordneten Verbrennungsmotors durch Bestimmung der Schwefelbeladung dieser Stickoxidfalle und Einleitung einer Entschwefelung bei Überschreitung eines bestimmten Schwefelbeladungsschwellenwertes, Die Stickoxidfalle wird hierbei für eine vorgegebene Zeit auf eine vorgegebene Temperatur gebracht, während der Verbrennungsmotor in dieser Zeit mit einem vorgegebenen Luft-/Kraftstoffverhältnis betrieben wird. Es kann auch eine Überwachung vorgesehen sein, ob sich der Verbrennungsmotor oberhalb einer vorgegebenen Drehzahl-Last-Kennlinie befindet. Ist dies nicht der Fall, kann eine eventuell erforderliche Entschwefelung hinausgezögert werden, bis diese Bedingung erfüllt ist.

Die nachveröffentlichte europäische Patentanmeldung 0 892 159 offenbart ein Abgasreinigungsverfahren für eine Brennkraftmaschine und eine Vorrichtung zur Durchführung dieses Verfahrens. Die Vorrichtung umfaßt einen NOₓ-Speicherkatalysator mit einem vorgeschalteten und einem nachgeschalteten Temperatursensor und eine zugeordnete Steuerungseinrichtung für die Brennkraftmaschine. Dem NOₓ-Speicherkatalysator ist zudem noch ein Lambdasensor vorgeschaltet. Ein nachgeschalteter NOₓ-Sensor ist diesem Dokument nicht zu entnehmen.

Die Aufgabe der vorliegenden Erfindung besteht in der Schaffung eines Verfahrens zur De-Sulfatierung eines einer mager betriebenen Brennkraftmaschine, insbesondere einem Common-Rail-Dieselmotor, nachgeschalteten NOₓ-Speicherkatalysators, das durch eine rechtzeitige und wirkungsvolle De-Sulfatierung eine ordnungsgemäße Funktionsweise des Katalysators gewährleistet, ohne daß es hierbei zu einer spürbaren Veränderung des Betriebsverhaltens der Brennkraftmaschine kommt. Die Aufgabe besteht zudem in der Schaffung einer einen NOₓ-Speicherkatalysator umfassenden Abgasreinigungsvorrichtung und eines zugehörigen Common-Rail-Dieselmotors zur Durchführung dieses Verfahrens.

Diese Aufgabe wird durch ein De-Sulfatierungsverfahren gelöst, bei dem in einem ersten Verfahrensschritt (Verfahrensschritt a) der Beladungszustand des NOₓ-Speicherkatalysators mit Schwefel bestimmt und mit einer einer gerade noch zulässigen minimalen Katalysatoraktivität entsprechenden vorbestimmten maximal zulässigen Schwefelbeladung verglichen wird, um den optimalen Zeitpunkt zur Entgiftung des Katalysators zu ermitteln.

Zur Feststellung einer Unregelmäßigkeit der Katalysatoraktivität erfolgt zudem eine OBD-Kontrolle (OBD = On-Board-Diagnose) des NOₓ-Speicherkatalysators (Verfahrensschritt b.).

Bei Feststellung einer Unregelmäßigkeit oder bei Überschreitung der zulässigen Katalysatorbeladung erfolgt dann zunächst eine Überprüfung der Zulässigkeit einer De-Sulfatierung, um unerwünschte oder gar gefährliche Betriebsbedingungen oder Fahrsituationen zu vermeiden. Hierbei werden sicherheitsrelevante Bauteile auf ordnungsgemäße Funktionsweise und die aktuelle Fahrsituation auf Einhaltung vorbestimmter Fahrparameter überprüft (Verfahrensschritt c).

Gleichzeitig mit der Zulässigkeitsüberprüfung oder im Anschluß daran erfolgt in einem weiteren Verfahrensschritt (Verfahrensschritt d) eine Überprüfung, ob durch Einhaltung vorbestimmter De-Sulfatierungsparameter aktuellerweise eine Möglichkeit zur Durchführung einer De-Sulfatierung gegeben ist. Diese Überprüfung kann auch bereits vor der Zulässigkeitsüberprüfung erfolgen.

Gegebenenfalls werden die erforderlichen De-Sulfatierungsparameter eingestellt und die De-Sulfatierung wird eingeleitet. Ansonsten erfolgt eine Wiederholung des Verfahrensschrittes c.) bis zur Zulässigkeit einer De-Sulfatierung. Gegebenenfalls wird auch eine die Durchführung einer De-Sulfatierung behindernde festgestellte Funktionsstörung eines der sicherheitsrelevanten Bauteile angezeigt.

Wenn die De-Sulfatierung sowohl zulässig als auch möglich ist, wird der NOₓ-Speicherkatalysator schließlich in einem letzten Verfahrensschritt e.) bis zum Erreichen eines vorbestimmten De-Sulfatierungsgrades regeneriert. Im Anschluß hieran werden die normalen Betriebsbedingungen wieder eingestellt und es erfolgt eine Rückkehr zum dem Verfahrensschritt a.).

Falls die aktuellen Ergebnisse der auch bei Durchführung der Verfahrensschritte d.) und e.) andauernden Zulässigkeitsüberprüfung des Verfahrensschrittes c.) dies erfordern, erfolgt bei erkannter Unzulässigkeit des De-Sulfatierungsvorgangs jedoch ein vorzeitiger Abbruch oder zumindest eine Unterbrechung der De-Sulfatierung und eine Rückkehr zum Verfahrensschritt a.) oder c.). Gegebenenfalls wird auch eine festgestellte Funktionsstörung eines der sicherheitsrelevanten Bauteile angezeigt.

Die Entscheidung über eine Rückkehr zu dem Verfahrensschritt a.) oder einer Rückkehr zu dem Verfahrensschritt c.) erfolgt vorzugsweise anhand des aktuellerweise bereits erreichten De-Sulfatierungsgrades, der mit einem vorbestimmten De-Sulfatierungsgrad verglichen wird. Bei Unterschreitung dieses Wertes wird von einer nicht ausreichenden Funktionsfähigkeit des Katalysators ausgegangen und es wird durch Rückkehr zu der Zulässigkeitsüberprüfung des Verfahrensschrittes c.) eine Fortsetzung des De-Sulfatierungsvorgangs eingeleitet. Beim Erreichen oder beim Überschreiten des vorbestimmten De-Sulfatierungsgrades hingegen ist bereits eine ausreichen hohe katalytische Aktivität gewährleistet und es erfolgt eine Rückkehr zu dem Verfahrensschritt a.) zur Ermittlung des optimalen Zeitpunktes für die nächste De-Sulfatierung. Der erreichte De-Sulfatierungsgrad wird über den Beladungszustand des Katalysators mit Schwefel bestimmt.

Bei einer bevorzugten Verfahrensvariante erfolgt die Einstellung der erforderlichen De-Sulfatierungsparameter in dem Verfahrensschritt d.) erst nach Ablauf einer vorbestimmten ersten Zeitspanne und/oder nach Überschreitung zumindest eines zweiten Schwellenwertes für die Schwefelbeladung, um möglichst wenig in das Betriebsverhalten der Brennkraftmaschine eingreifen zu müssen.

Weitere bevorzugte Verfahrensvarianten sind den zugehörigen Unteransprüchen zu entnehmen.

Um das Verfahren bei einem Common-Rail-Dieselmotor anwenden zu können, wird dieser erfindungsgemäß zusätzlich mit einer vor dem Ansaugkrümmer angeordneten Drosselklappe versehen.

Eine erfindungsgemäße Abgasreinigungsvorrichtung zur Durchführung des Verfahrens umfaßt einen NOx-Speicherkatalysator, dem zur Bestimmung der optimalen De-Sulfatierungstemperatur zumindest je ein Temperaturfühler vorgeschaltet bzw. nachgeschaltet ist, aus deren Meßwerten die eigentlich gewünschte Katalysatortemperatur bestimmt wird. Dem NOₓ-Speicherkatalysator kann zudem eine Breitbandlambdasonde zur Bestimmung des Lambda-Wertes vorgeschaltet und ein NOₓ-Sensor zur Bestimmung der NOₓ-Emission nachgeschaltet sein.

Weitere Merkmale und Vorteile des erfindungsgemäßen Verfahrens und der erfindungsgemäßen Vorrichtungen zur Durchführung dieses Verfahrens ergeben sich nicht nur aus den zugehörigen Ansprüchen - für sich und/oder in Kombination - sondern auch aus der nachfolgenden Beschreibung bevorzugter Ausführungsbeispiele in Verbindung mit den zugehörigen Zeichnungen. In den Zeichnungen zeigen:

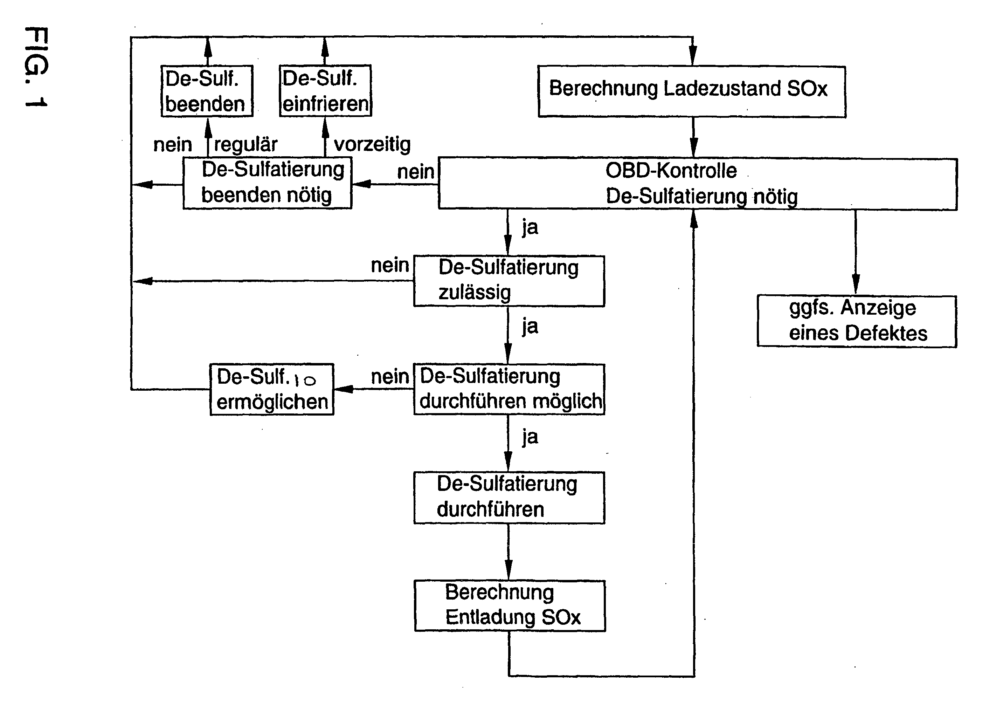

- Fig. 1:: ein Flußdiagramm des erfindungsgemäßen Verfahrens und
- Fig.2:: eine schematische Darstellung einer einem Common-Rail-Dieselmotor nachgeschalteten erfindungsgemäßen Abgasreinigungsvorrichtung.

Ausgangspunkt für das erfindungsgemäße Verfahren ist die kontinuierliche Bestimmung des Beladungszustandes eines NOₓ-Speicherkatalysators mit Schwefel, der sich einfach über den kumulierten Kraftstoffverbrauch seit der letzten De-Sulfatierung berechnen läßt. Vereinfachend kann nämlich mit einer für die Praxis hinreichenden Genauigkeit von einer hundertprozentigen Effizienz bei der Schwefeleinlagerung und einem zu vernachlässigenden Abbau des eingelagerten Schwefels bei einer NOₓ-Regeneration ausgegangen werden Es sind jedoch auch andere Bestimmungsmöglichkeiten denkbar.

Da die katalytische Aktivität und damit die Funktionstüchtigkeit des Katalysators, wie bereits erwähnt wurde, mit steigender Schwefelbeladung allmählich absinkt, wird zur Gewährleistung einer ordnungsgemäßen Funktionsweise des Katalysators bei Überschreitung eines einer maximal zulässigen Schwefelbeladung bzw. Unterschreiten einer minimal zulässigen Katalysatoraktivität entsprechenden vorbestimmten Schwellenwertes eine De-Sulfatierung als erforderlich erachtet und es werden die hierfür erforderlichen Maßnahmen in Form der nachfolgend beschriebenen Verfahrensschritte ergriffen.

Zur Gewährleistung einer ordnungsgemäßen Betriebsweise des NOₓ-Speicherkatalysators findet zudem ergänzend zu der Bestimmung des Beladungszustandes eine OBD-Kontrolle (OBD = On-Board-Diagnose) des Katalysators statt, die im wesentlichen aus einer Überwachung der NOₓ-Speicheraktivität zur Feststellung eventuell auftretender Unregelmäßigkeiten besteht.

Unregelmäßigkeiten der Katalysatoraktivität machen sich im wesentlichen durch zwei Schädigungsbilder bemerkbar, die auch gemeinsam auftreten können:
■ Nach einer NOₓ-Regeneration wird zunächst eine gute NOₓ-Einlagerung gemessen, die Sättigung setzt jedoch schneller und stärker als berechnet ein.
■ Nach einer NOx-Regeneration wird ein stärkerer NOₓ-Durchbruch gemessen als nach den Berechnungen zu erwarten ist.

Bei Belegung oder Zerstörung der Edelmetallkomponenten des Katalysators ist neben der abnehmenden NOₓ-Aktivität auch mit einer Minderung der HC⁻, CO⁻ und Partikelkonvertierung zu rechnen, so daß ein Abgleich der berechneten mit der gemessenen NOₓ-Speichereffizienz zur Kat-Diagnose ausreicht. Unregelmäßigkeiten der Katalysatoraktivität werden daher durch Bestimmung von NOₓ-Durchbrüchen ermittelt, die in einem vorbestimmten Zeitfenster einen vorbestimmten Schwellenwert überschreiten müssen, der bis zu einer NOₓ-Rohemission von etwa 10 g/h einer Abweichung von etwa 2 g/h zwischen Istwert und Sollwert entspricht, währen der bei höheren NOₓ-Rohemissionen einer Abweichung von 20 % entspricht.

Nach Feststellung einer solchen Unregelmäßigkeit der Katalysatoraktivität wird zunächst zumindest eine vorgezogene NOₓ-Regeneration durchgeführt. Bei Fortbestehen der Unregelmäßigkeiten wird zudem, wie bei einer zu hohen Schwefelbeladung auch, unter Durchführung der nachfolgenden beschriebenen Verfahrensschritte eine De-Sulfatierung eingeleitet.

Hierzu wird zunächst die aktuelle Fahrsituation auf Einhaltung vorbestimmter Fahrparameter überprüft, da eine De-Sulfatierung nicht bei allen Fahr- oder Betriebssituationen zulässig ist Zur Durchführung einer De-Sulfatierung müssen insbesondere die Drehzahl, die Last, die Laständerung und die Fahrgeschwindigkeit innerhalb vorgegebener Zulässigkeitsgrenzen liegen, die eingehalten werden müssen, damit eine De-Sulfatierung erfolgen kann oder eine bereits begonnene De-Sulfatierung nicht unterbrochen oder abgebrochen wird.

Bei sehr hohen Drehzahlen und Lasten ist eine Anfettung des insbesondere bei Turbomotoren sehr hohen Abgasmassenstroms auf einen Lambda-Wert von weniger als 1, wie er zur Durchführung einer De-Sulfatierung erforderlich ist, nur in Verbindung mit hoher Exothermie im Abgas möglich, so daß bei Drehzahlen von mehr als etwa 3600 min⁻¹ keine De-Sulfatierung erfolgt. Auch bei Drehzahlen von weniger als etwa 1200 min ⁻¹ wird eine De-Sulfatierung unterdrückt, da diese nur während des Fahrbetriebs mit entsprechend hohen Drehzahlen erfolgen soll, um akustische Einflüsse durch die erforderliche Teilandrosselung in Fahrphasen mit höheren Abroll- und Windgeräuschen, d.h. höhere Geschwindigkeiten, zu verlagern und um eventuell auftretende, unerwünschte geruchsintensive Reaktionsprodukte nicht im Stillstand oder bei zu geringer Fahrgeschwindigkeit zu emittieren. Aus diesem Grund wird auch die zulässige Mindestgeschwindigkeit zur Durchführung einer De-Sulfatierung auf etwa 30 km/h begrenzt.

Zur Vermeidung gefährlicher Fahrsituationen wird auch bei abrupten Laständerungswünschen keine De-Sulfatierung zugelassen. Als Maß für die Laständerungswünsche dient hierbei eine zeitliche Veränderung des Pedalwertgebers PWG oder die PWG-Geschwindigkeit, die beispielsweise einen Wert von etwa 100 %/s nicht überschreiten darf.

Die Zulässigkeit einer De-Sulfatierung bei einer vorgegebenen Fahrsituation kann auch aus Schwellenwerten für die Einspritzmenge den Drehzahlgradienten oder ein Schuberkennungs- oder Bremssignal abgeleitet werden, wobei beispielsweise die Einspritzmenge in Abhängigkeit vom verwendeten Motortyp 10 - 90 % des Maximalwertes betragen sollten. Falls eine oder mehrere dieser Möglichkeiten nicht benötigt werden, so können diese durch entsprechende Wahl der Schwellenwerte oder Zulässigkeitsgrenzen oder durch soft- oder hardwaremäßige Schalter außer Betrieb genommen werden.

Der NOₓ-Speicherkatalysator benötigt nach einer vollständig verlaufenen oder aus den nachstehend noch dargelegten Gründen unterbrochenen oder vorzeitig abgebrochenen De-Sulfatierung stets eine Abkühl- oder Erholungspause bis zu einer erneuten De-Sulfatierung, deren Dauer abhängig ist von der zum Erreichen des De-Sulfatierungszustandes erforderlichen Vorbereitungszeit und der eigentlichen De-Sulfatierungsdauer. Typische Zeiten liegen zwischen 10 und 170 min, insbesondere jedoch zwischen 30 und 100 min. Nach Beendigung einer De-Sulfatierung wird daher durch ein entsprechendes Abbruch- oder Endsignal eine Zeitfunktion gestartet, die in Abhängigkeit von der Vorbereitungs- und De-Sulfatierungszeit eine variable Erholungszeit errechnet, in der keine De-Sulfatierung zugelassen wird. Vor dem Einleiten einer De-Sulfatierung wird daher als weitere Zulässigkeitsvoraussetzung auch die Einhaltung der erforderlichen Erholungsdauer überprüft.

Da die erforderliche Anfettung des Abgasstroms auf λ ≤ 1 zu einer Anhebung der gesamten eingespritzten Kraftstoffmenge und damit zu einer Leistungszunahme führen kann, werden zudem die sicherheitsrelevanten Bauteile, wie das Einspritzsystem, die Drosselklappe und der EGR-/Ladedrucksteller, auf ordnungsgemäße Funktionsweise überprüft und eine Regeneration nur zugelassen, wenn von diesen Bauteilen keine Fehlermeldungen kommen.

Gleichzeitig mit dieser Zulässigkeitsprüfung oder im Anschluß daran wird geprüft, ob durch Einhaltung vorbestimmter De-Sulfatierungsparameter die Möglichkeit zur Durchführung einer De-Sulfatierung gegeben ist. Gegebenenfalls kann diese Überprüfung auch bereits vor der Zulässigkeitsüberprüfung erfolgen.

Zur Gewährleistung einer erfolgreichen De-Sulfatierung muß insbesondere die Katalysatortemperatur zwischen 500 und 850 °C, vorzugsweise jedoch zwischen 600 und 700 °C liegen. Die Einhaltung dieser Grenzen wird über die gemessenen oder berechneten Abgastemperaturen vor und nach dem NOₓ-Speicherkatalysator überwacht, wobei gegebenenfalls auch bereits einer dieser beiden Werte ausreicht.

Bei Zulässigkeit einer De-Sulfatierung werden nun gegebenenfalls die erforderlichen De-Sulfatierungsparameter eingestellt und die De-Sulfatierung des Katalysators wird eingeleitet. Da die Katalysatortemperatur insbesondere bei Dieselfahrzeugen, üblicherweise erheblich zu niedrig für die Durchführung einer De-Sulfatierung ist, bedeutet dies insbesondere, daß zunächst die Katalysatortemperatur durch motorische Maßnahmen und durch eine Nacheinspritzung angehoben werden muß. Zur Begrenzung der Katalysatortemperatur nach oben oder unten können hierbei die EGR-Rate (Abgasrückführungsrate) die Stellung der Drosselklappe, der Ladedrucksteller, die Nacheinspritzmenge, der Nacheinspritzzeitpunkt und der Spritzbeginn der Haupteinspritzung variiert werden.

Als Haupteingangsdaten für die kennfeldmäßige Berechnung der Parameteränderungen dient der Betriebspunkt (Drehzahl n, aktuelle Einspritzmenge M_E). Die Abgastemperaturen vor und nach dem NOx-Speicherkatalysator, die Kühlmitteltemperatur und der Atmosphärendruck bilden hierbei über Kennlinien Korrekturwerte, die multiplikativ in die Berechnung der Parameteränderungen eingehen.

Bei der Nacheinspritzmenge als Hauptenergielieferant ist zur beschleunigten Aufheizung eine zweistufige Vorgehensweise erforderlich. Zunächst wird dem Abgas eine hohe Energiemenge zugesetzt, um nach der Konvertierung an einem Vorkatalysator mit der über der Mindest-Desulfatierungstemperatur liegenden Abgastemperatur den Katalysator schnell hochzuheizen. Bei Annäherung der Temperatur nach dem Katalysator an die Mindest-Desulfatierungstemperatur kann die Nacheinspritzmenge zur Vermeidung von Überhitzungsschäden zurückgenommen werden, so daß die mittlere Temperatur des NOₓ-Speicherkatalysators etwa auf dem Niveau der Mindest-Desulfatierungstemperatur gehalten wird und nicht mehr nennenswert zunimmt. Die Kennlinien sollten so ausgelegt sein, daß bei stationärer Ansteuerung des Systems ein Sicherheitsabstand von zumindest 30 °C zur maximal zulässigen De-Sulfatierungstemperatur eingehalten wird.

Die Nacheinspritzmenge wird hierbei für 20 - 200 s, insbesondere jedoch für 30 - 60 s, auf einem reduzierten Wert "eingefroren", der 20 - 70 %, vorzugsweise jedoch 50 %, der zum Halten der Mindest-Abgastemperatur von etwa 220 °C erforderlichen Nacheinspritzmenge entspricht.

Eine zusätzliche Kontrolle erfolgt über ein Lambdasignal, das zur Gewährleistung einer hinreichend schnellen Oxidationsreaktion auf dem Vorkatalysator und dem NOₓ-Speicherkatatysator einen vorbestimmten Schwellenwert nicht überschreiten darf, die dem durch motorische Maßnahmen einzustellenden Lambda-Wert bei der De-Sulfatierung entspricht.

In Abhängigkeit von dem vor Einleitung der motorischen Maßnahmen vorliegenden Lambda-Wert kann die Vorbereitung der De-Sulfatierung zunächst bis zu einer Lambdaschwelle von etwa 1,3 - 1,6 schnell eingeleitet werden. Mit Annäherung an den De-Sulfatierugs-Lambda-Wert von etwa 0,95 - 0,99 wird dann die Verstellgeschwindigkeit der Aktuatoren zunehmend verlangsamt, um eine annähernd drehmomentneutrale Anpassung der Haupteinspritzung zu ermöglichen. Der Lambda-Wert bei der De-Sulfatierung wird über die PWG-Geschwindigkeit dynamikkorrigiert und kann zusätzlich über den zeitlichen Verlauf der De-Sulfatierung moduliert werden.

Da die De-Sulfatierung überwiegend mit CO als Regenerationsmittel abläuft, wird in der dritten Stufe die Voreinspritzmenge betriebspunktabhängig und gedämpft angehoben und gleichzeitig die Haupteinspritzmenge betriebspunktabhängig und gedämpft zurückgenommen. Der Voreinspritzzeitpunkt liegt hierbei vor Zündbeginn im Ansaugtakt oder in der ersten Phase des Verdichtungstaktes.

Um das Fahrverhalten möglichst wenig zu beeinflussen, kann die Einstellung der erforderlichen De-Sulfatierungsparameter auch erst nach Ablauf einer vorbestimmten Zeitspanne oder nach Überschreitung eines zweiten Schwellenwertes für die Schwefelbeladung erfolgen, der beispielsweise einer Beladung entspricht, bei der eine De-Sulfatierung oder Regeneration dringend erforderlich ist. In diesem Fall wird der Beladungszustand des NOₓ-Speicherkatalysators durch die Schwellenwerte in drei charakteristische Bereiche unterteilt, in denen eine "De-Sulfatierung nicht nötig", eine "De-Sulfatierung nötig" oder eine "De-Sulfatierung dringend nötig" ist. Es ist auch eine Kombination beider Verfahren oder auch eine feinere Unterteilung des Beladungszustandes durch Verwendung weitere Schwellenwerte denkbar.

Im Zustand "De-Sulfatierung nötig" findet dann eine De-Sulfatierung des NOₓ-Speicherkatalysators nur statt, wenn sowohl die Betriebssituation eine De-Sulfatierung erlaubt, d. h., wenn die angegebenen Zulässigkeitsvoraussetzungen erfüllt sind, als auch die erforderlichen Betriebsparameter eingestellt sind und eine De-Sulfatierung ermöglichen. Andernfalls wird mit einer De-Sulfatierung so lange gewartet, bis der Zustand "De-Sulfatierung dringend nötig" erreicht ist. Dann wird jedoch beim Vorliegen der Zulässigkeitsvoraussetzungen durch verschiedene motorische Maßnahmen der genannten Art, die einzeln oder in Kombination erfolgen, auf die Betriebsparameter derart Einfluß genommen, daß eine De-Sulfatierung durchgeführt werden kann. Durch diese zweistufige Vorgehensweise wird das Betriebsverhalten der Brennkraftmaschine so wenig wie möglich beeinflußt.

Vor Einsetzen der De-Sulfatierung muß zunächst der im NOₓ-Speicherkatalysator lagernde Restsauerstoff verbraucht werden. Anschließend werden die gespeicherten Stickoxide mit dem Reduktionsmittelüberschuß umgesetzt. Die Reaktion läuft nicht vollkommen stöchiometrisch ab, sondern wird über den Lambda-Wert, den Abgasmassenstrom und die Abgastemperatur vor und nach dem NOₓ-Speicherkatalysator korrigiert.

Die eigentliche De-Sulfatierung wird durch eine Teilandrosselung des Motors, eine Erhöhung der EGR-Rate, eine Senkung des Ladedrucks, eine Anhebung der Voreinspritzmenge, eine Anhebung der Nacheinspritzmenge und/oder eine Senkung der Haupteinspritzmenge gesteuert.

Vorteilhaft wird zunächst ein Brennverlauf mit λ = 1,2 - 1,5 eingestellt und die Abgasanfettung auf λ ≤ 1 erfolgt über die Nacheinspritzung. Zusätzlich wird vorzugsweise die Voreinspritzmenge mit dem Ziel der CO-Bildung als Haupt-Desulfatierungs-Reagens angehoben und die Haupteinspritzmenge abgesenkt.

Insbesondere durch die Teilandrosselung ist mit einer Momentenänderung zu rechnen, die durch Anpassung der Haupteinspritzmenge korrigiert werden muß, ohne daß der Fahrer eine Änderung des Fahrverhaltens bemerkt. Die Korrektur der Momentenänderung kann hierbei auch erst nach Überschreiten eines bestimmten Schwellenwertes erfolgen.

Zur Korrektur wird zunächst per Kennfeld ein Sollmoment abgerufen. Momentenänderungen als Folge eines Motoreingriffs ergeben sich durch Abweichungen bei der Ladungswechselarbeit und durch eine Verbrennungsverschleppung infolge anderer Drosselklappen- und EGR- und Ladedruckeinstellungen. Daneben führt eine unvollständige Verbrennung bei sehr niedrigen Lambda-Werten als Folge von Androsselung/Ladedrucksenkung/Anhebung der EGR-Rate zu einer Korrektur des Sollmomentes. Bei sehr hohen Nacheinspritzmengen verbleiben Kraftstoffreste im Zylinder, die erst im nächsten Takt mit verbrennen und somit ebenfalls momentenbeeinflussend sind. Nur zur Applikationserleichterung wird abschließend bei der Ermittlung des tatsächlichen Momentes ein weiteres Korrekturfeld additiv eingeschleift.

Eine Änderung der Haupteinspritzmenge wird erst freigegeben, wenn ein vorbestimmter Schwellenwert der Momentenabweichung überschritten wird.

Im Unterschied zu einer NOₓ-Regeneration ist die im fetten Abgas (λ < 1) anschließend pro Zeiteinheit mögliche absolute Schwefelentladung des NOₓ-Speicherkatalysators nur in geringem Maße vom verfügbaren Reduktionsmittelangebot abhängig. In diesem Fall ist eine deutlich überstöchiometrische Reduktionsmittelzugabe erforderlich. Sofern eine durch die Voreinspritz-Verstellung sichergestellte Mindest-CO-Menge zur Verfügung steht, läßt sich die Schwefelentladung formelmäßig aus der Katalysatortemperatur, dem Lambda-Wert und dem Rest-Beladungszustand bestimmten. Die Entschwefelung wird jedoch nur bei einer bestimmten CO-Mindestdurchströmung berechnet, die mindestens 50 g/h CO, vorzugsweise jedoch 300 g/h CO beträgt. Wegen der langen De-Sulfatierungszeiten im Vergleich zu einer NOₓ-Regeneration kann auf die Berücksichtigung des O₂-Restgehaltes verzichtet werden.

Die De-Sulfatierung wird üblicherweise bis zum Erreichen eines vorbestimmten De-Sulfatierungsgrades durchgeführt. Anschließend werden wieder normale Betriebsbedingungen eingestellt und es wird erneut mit der eingangs beschriebenen Bestimmung des Beladungszustandes begonnen, um den Zeitpunkt für die nächste De-Sulfatierung zu ermitteln.

Bei dieser regulären Beendigung der De-Sulfatierung werden zunächst die Nacheinspritzmenge und der Zeitpunkt der Nacheinspritzung sofort wieder auf den regulären Wert eingestellt. Anschließend wird die Voreinspritzmenge zeitgesteuert rampenförmig auf den Normalwert zurückgeführt, wobei jedoch die Änderungsgeschwindigkeit größer ist als bei der Durchführung der De-Sulfatierung. Zudem werden die Drosselklappe, der EGR-Steller und der Ladedruckregler mit einer vom Lambda-Wert und vom Betriebspunkt (Drehzahl n, aktuelle Einspritzmenge M_E) abhängiger Verstellgeschwindigkeit auf die Normalwerte zurückgeführt.

In manchen Fällen kann es jedoch auch zu einem vorzeitigen Abbruch oder zumindest zu einer Unterbrechung eines bereits begonnenen De-Sulfatierungsvorgangs kommen, falls dieser aufgrund der aktuellen Ergebnisse der bereits beschriebenen Zulässigkeitsüberprüfung unzulässig sein sollte.

Eine andere Möglichkeit für eine plötzliche Unzulässigkeit des De-Sulfatierungsvorgangs besteht in einer zu hohen thermischen Belastung des NOₓ-Speicherkatalysators durch Überschreitung eines Schwellenwertes für die De-Sulfatierungs-Gesamtzeit, die sich aus der zum Umschalten vom normalen Betriebszustand in den De-Sulfatierungszustand erforderlichen Vorbereitungs- oder Aufheizzeit und aus der zur Durchführung einer De-Sulfatierung erforderlichen eigentlichen De-Sulfatierungszeit zusammensetzt. Alternativ hierzu können auch Schwellenwerte für die Einzelzeiten verwendet werden. Die zulässige Vorbereitungszeit zur Durchführung einer De-Sulfatierung und die zulässige De-Sulfatierungsdauer betragen hierbei jeweils maximal 200 - 300 s, wobei jeweils der untere Wert zu bevorzugen ist.

In diesen Fällen ist ein vollständiger Abbruch des De-Sulfatierungsvorgangs, obgleich er prinzipiell möglich ist, üblicherweise nicht sinnvoll, da dann die zum Aufheizen des Katalysators eingesetzte Energie verloren wäre. Sinnvoller ist es vielmehr die Katalysatortemperatur innerhalb eines vorbestimmten Beobachtungszeitraums durch abgeschwächte temperaturerhaltende Maßnahmen zunächst beizubehalten und erst nach Fortbestehen der Unzulässigkeit nach Ablauf dieses Zeitraums auf normale Betriebswerte abzusenken. In dem Beobachtungszeitraum werden daher zunächst die motorischen Maßnahmen wie bei einer regulären Beendigung der De-Sulfatierung auf die Normalfunktion zurückgeführt, während man die Nacheinspritzung zum Halten der Katalysatortemperatur weiterlaufen läßt Hierdurch wird die De-Sulfatierung sozusagen "eingefroren". Erst wenn innerhalb des Beobachtungszeitraums der Status "De-Sulfatierung zulässig" nicht wieder erreicht wird, wird auch die Nacheinspritzung auf die Normalfunktion gesetzt. Zudem wird gegebenenfalls eine festgestellte Funktionsstörung eines der sicherheitsrelevanten Bauteile angezeigt.

Im Falle einer zu geringen Fahrgeschwindigkeit erfolgt das "Einfrieren" für etwa 60 - 600 s, insbesondere jedoch für etwa 300 s, mit einer Begrenzung der Nacheinspritzmenge auf etwa 0,2 - 0,3 kg/h, wobei ein Wert von etwa 0,25 kg/h zu bevorzugen ist. Aus sonstigen Gründen erfolgt das "Einfrieren" für etwa 30 - 300 s, insbesondere jedoch für etwa 150 s.

Auch nach Ablauf des Beobachtungszeitraums wird kontinuierlich die Zulässigkeit einer De-Sulfatierung, sowie die Möglichkeit zu deren Durchführung weiter überprüft, um den abgebrochenen De-Sulfatierungsvorgang durch Weiterführung so bald wie möglich zu beenden und damit die volle Funktionsfähigkeit des NOₓ-Speicherkatalysators wieder herstellen zu können.

Ein sofortiger vollständiger Abbruch des De-Sulfatierungsvorgangs erfolgt jedoch dann, wenn der bis zu diesem Zeitpunkt bereits erreichte De-Sulfatierungsgrad einen vorbestimmten De-Sulfatierungsgrad überschreitet, d. h. eine vorbestimmte Schwefelbeladung unterschreitet, die etwa einer Restbeladung von 5 - 15 % bezogen auf den Beladungszustand bei Einleitung der De-Sulfatierung entspricht. In diesem Fall ist der NOₓ-Speicherkatalysator durch die vorangegangene De-Sulfatierung bereits ausreichend gut regeneriert, um eine ordnungsgemäße Funktionsweise gewährleisten zu können.

Nach dem vorzeitigen Abbruch oder einer Unterbrechung eines De-Sulfatierungsvorgangs wird daher die Schwefelbeladung des NOₓ-Speicherkatalysators und damit dessen De-Sulfatierungsgrad bestimmt und mit der angegebenen maximal zulässigen Restbeladung verglichen. Bei Unterschreitung dieses Wertes wird der De-Sulfatierungsvorgang wegen ausreichender Funktionstüchtigkeit des Katalysators ohne Durchführung der oben erwähnten temperaturerhaltenden Maßnahmen endgültig abgebrochen und es wird statt dessen durch Rückkehr zu der Anfangs beschriebenen kontinuierlichen Bestimmung des Beladungszustandes der Zeitpunkt für die nächste reguläre De-Sulfatierung bestimmt. Beim Erreichen oder Überschreiten dieses Wertes hingegen wird die De-Sulfatierung innerhalb des Beobachtungszeitraums auf die beschriebene Art und Weise "eingefroren", um die zum Aufheizen des Katalysators eingesetzte Energie möglichst optimal nutzen zu können.

Die De-Sulfatierung gilt als beendet, wenn die Abweichung des Ist-Lambda-Wertes vom Normal-Lambda-Wert unterhalb eines bestimmten Schwellenwertes liegt, wobei der Lambda-Wert sowohl durch eine Messung mittels eines Lambda-Sensors als auch über eine Berechnung bestimmt werden kann.

Zur Gewährleistung einer ordnungsgemäßen Funktionsweise des NOx-Speicherkatalysators wird nach einer vorgezogenen De-Sulfatierung auf Grund einer durch die OBD-Kontrolle ermittelten Unregelmäßigkeit der Katalysatoraktivität die Anzahl der nachfolgend durchgeführten NOₓ-Regenerationen bestimmt und mit einer vorbestimmten Mindestanzahl aufeinanderfolgender NOₓ-Regenerationen verglichen, die 10-100, vorzugsweise jedoch etwa 20 beträgt. Beim Auftreten einer erneuten Unregelmäßigkeit der Katalysatoraktivität vor Erreichung dieser Mindestanzahl wird von einem Katalysatordefekt ausgegangen, der durch eine ansprechende Anzeigeeinrichtung angezeigt wird.

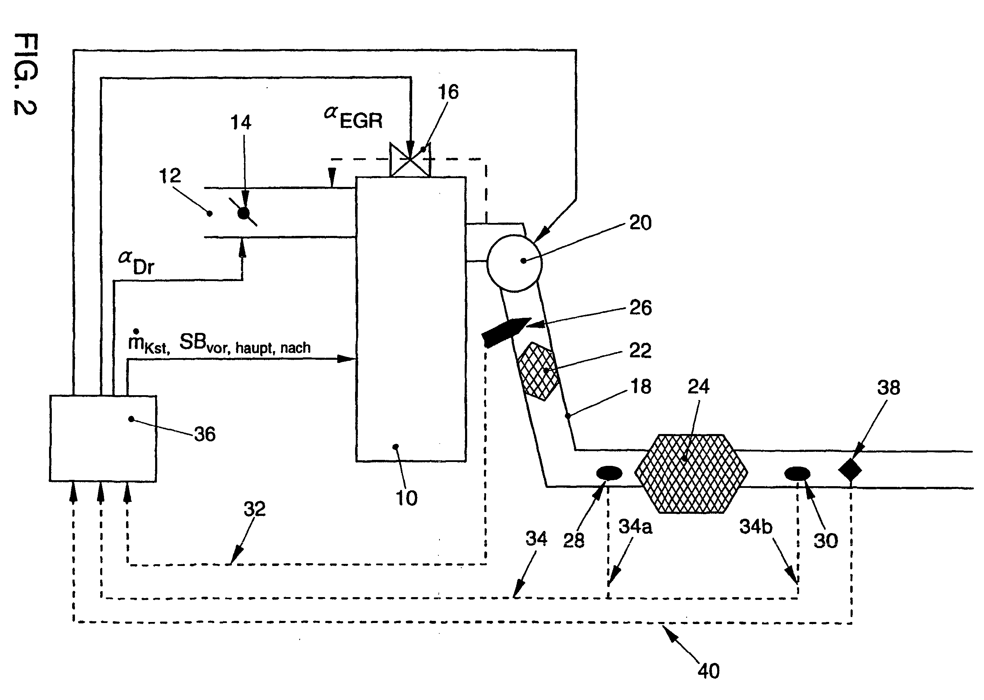

Fig. 2 zeigt in schematischer Darstellung einen zur Durchführung des erfindungsgemäßen Verfahrens geeigneten Common-Rail-Dieselmotor 10 mit einem vorgeschalteten Saugrohr 12 und einer darin eingebauten Drosselklappe 14, die hinter nicht dargestellten Ladedruck- und Temperatursensoren aber vor einer EGR-Einleitung 16 angeordnet ist und zur Reduzierung des Luft-Kraftstoffverhältnisses Lambda ohne Drehmomenteneinbrüche dient. Die Ansteuerung der Drosselklappe 14 erfolgt entweder durch ein pulweitenmoduliertes Signal mit fester Frequenz, welches sich aus dem Tastverhältnis der Ansteüerung ergibt, oder durch eine CAN-Botschaft, die prozentual die Stellung der Drosselklappe 14 beschreibt. Die Ruhestellung der Drosselklappe 14 ist grundsätzlich in Stellung "offen". Die Definition, welcher Wert des Ansteuersignals welcher Drosselklappenstellung entspricht, ist per Software einstellbar.

Das Abgas des Dieselmotors 10 gelangt über eine Abgasleitung 18 mit einem Abgasturbolader 20 in eine Abgasreinigungsvorrichtung mit einem Vorkatalysator 22 und einem NOₓ-Speicherkatalysator 24. Dem Vorkatalysator 22 ist eine Breitbandlambdasonde 26 zur Messung des Lambda-Wertes vorgeschaltet, die zusätzlich oder alternativ zu einer Berechnung des Lambda-Wertes erfolgt.

Vor dem NOₓ-Speicherkatalysator 24 und nach dem NOₓ-Speicherkatalysator 24 ist jeweils ein Temperaturfühler 28 bzw. 30 zur Überwachung der minimal bzw. maximal zulässigen De-Sulfatierungstemperatur angeordnet. Die Temperaturfühler 28, 30 dienen zudem zur Überwachung der für eine NOₓ-Regeneration erforderlichen Mindesttemperatur sowie zur Steuerung der optimalen NOₓ-Einlagerung. Durch Vergleich der Ausgangstemperatur mit der Eingangstemperatur kann die katalytische Aktivität des NOₓ-Speicherkatalysators 24 überwacht werden.

Dem NOx-Speicherkatalysator 24 ist ein NOₓ-Sensor 38 zur Messung der Stickoxidemission nachgeschaltet, der zur Bestimmung von Unregelmäßigkeiten der Katalysatoraktivität dient.

Die Meßsignale der Breitbandlambdasonde 26, der Temperaturfühler 28, 30 und des NOₓ-Sensors 38 liegen über Leitungen 32, 34, 40 an einer zugehörigen Steuereinrichtung 36 zur Steuerung des Motors 10 an.

## Patentansprüche

1. Verfahren zur De-Sulfatierung eines einer mager betriebenen Brennkraftmaschine (10) nachgeschalteten NOₓ-Speicherkatalysators (24) mit folgenden Verfahrensschritten:
a.) Bestimmung des Beladungszustandes des NOₓ-Speicherkatalysators (24) mit Schwefel und Vergleich der ermittelten Beladungswerte mit einem vorbestimmten ersten Schwellenwert für eine maximal zulässige Schwefelbeladung;
b.) OBD-Kontrolle des NOₓ-Speicherkatalysators (24) zur Überwachung der Katalysatoraktivität;
c.) bei Überschreitung des Schwellenwertes oder bei Feststellung einer Unregelmäßigkeit der Katalysatoraktivität Überprüfung der Zulässigkeit einer De-Sulfatierung durch Überprüfung der ordnungsgemäßen Funktionsweise sicherheitsrelevanter Bauteile und Überprüfung der aktuellen Fahrsituation auf Einhaltung vorbestimmter Fahrparameter,
d.) Überprüfung, ob durch Einhaltung vorbestimmter De-Sulfatierungsparameter die Möglichkeit zur Durchführung einer De-Sulfatierung gegeben ist, gegebenenfalls Einstellung der erforderlichen De-Sulfatierungsparameter und Einleitung der De-Sulfatierung bei Zulässigkeit einer solchen Maßnahme, ansonsten Wiederholung des Verfahrensschrittes c.) undloder gegebenenfalls Signalisierung einer festgestellten Funktionsstörung eines der sicherheitsrelevanten Bauteile; und
e.) Durchführung der De-Sulfatierung bis zum Erreichen eines vorbestimmten De-Sulfatierungsgrades, Einstellung normaler Betriebsbedingungen und Rückkehr zu dem Verfahrensschritt a.) oder vorzeitiger Abbruch oder Unterbrechung der De-Sulfatierung, falls die aktuellen Ergebnisse der Zulässigkeitsprüfung des Verfahrensschrittes c.) dies erfordern, Rückkehr zu dem Verfahrensschritt a.) oder c.) und gegebenenfalls Signalisierung einer festgestellten Funktionsstörung eines der sicherheitsrelevanten Bautelle.

2. Verfahren nach Anspruch 1, **dadurch gekennzeichnet, daß** die Einstellung der erforderlichen De-Sulfatierungsparameter bei dem Verfahrensschritt d.) erst nach Ablauf einer vorbestimmten ersten Zeitspanne und/oder nach Überschreitung zumindest eines zweiten Schwellenwertes für die Schwefelbeladung erfolgt.

3. Verfahren nach Anspruch 1 oder 2, **dadurch gekennzeichnet, daß** nach dem vorzeitigen Abbruch oder der Unterbrechung der De-Sulfatierung der Beladungszustand der NOx-Speicherkatalysators (24) mit Schwefel bestimmt und bei Unterschreitung eines vorbestimmten De-Sulfatierungsgrades, d. h. bei Überschreitung einer vorbestimmten Schwefelbeladung, durch Rückkehr zu dem Verfahrensschritt c.) eine erneute De-Sulfatierung eingeleitet wird, während beim Erreichen oder bei einer Überschreitung des vorbestimmten De-Sulfatierungsgrades eine Rückkehr zu dem Verfahrensschritt a.) erfolgt.

4. Verfahren nach Anspruch 3, **dadurch gekennzeichnet, daß** der vorbestimmte De-Sulfatierungsgrad weniger als 5 - 15 % Restbeladung bezogen auf den Beladungszustand bei Einleitung der De-Sulfatierung beträgt.

5. Verfahren nach einem der vorhergehenden Ansprüche, **dadurch gekennzeichnet, daß** als Brennkraftmaschine (10) ein Common-Rail-Dieselmotor verwendet wird.

6. Verfahren nach einem der vorhergehenden Ansprüche, **dadurch gekennzeichnet, daß** als sicherheltsrelevante Bauteile das Einspritzsystem und/oder die Drosselklappe (14) und/oder der EGR-/Ladedrucksteller überprüft werden.

7. Verfahren nach einem der vorhergehenden Ansprüche, **dadurch gekennzeichnet, daß** die Fahrsituation aus einem Schwellenwert für den Pedalwertgeber PWG und/oder der Einspritzmenge und/oder der Drehzahl und/oder einem Schuberkennungssignal und/oder einem Bremssignal und/oder einem Drehzahlgradienten abgeleitet wird.

8. Verfahren nach einem der vorhergehenden Ansprüche, **dadurch gekennzeichnet, daß** eine De-Sulfatierung nur bei Überschreitung einer bestimmten Mindestgeschwindigkeit durchgeführt wird.

9. Verfahren nach Anspruch 8, **dadurch gekennzeichnet, daß** die Mindestgeschwindigkeit 30 km/h beträgt.

10. Verfahren nach einem der vorhergehenden Ansprüche, **dadurch gekennzeichnet, daß** nur in einem bestimmten Drehzahl- oder Lastbereich und in einem bestimmten Bereich von Laständerungswünschen oder der PWG-Geschwindigkeit eine De-Sulfatierung durchgeführt wird.

11. Verfahren nach Anspruch 10, **dadurch gekennzeichnet, daß** der Drehzahlbereich 1200 - 3600 min⁻¹ beträgt, während die maximale PWG-Geschwindigkeit < 100 %/s ist.

12. Verfahren nach einem der vorhergehenden Ansprüche, **dadurch gekennzeichnet, daß** eine De-Sulfatierung nur durchgeführt wird, wenn die Einspritzmenge 10 - 90 % des Maximalwertes beträgt.

13. Verfahren nach einem der vorhergehenden Ansprüche, **dadurch gekennzeichnet, daß** die Einhaltung der erforderlichen De-Sulfatierungstemperatur durch Bestimmung der Abgastemperatur vor und/oder nach dem NOₓ-Speicherkatalysator (24) überwacht wird.

14. Verfahren nach einem der vorhergehenden Ansprüche, **dadurch gekennzeichnet, daß** zur Durchführung einer De-Sulfatierung eine Abgastemperatur von 500 - 850 °C eingestellt wird.

15. Verfahren nach Anspruch 14, **dadurch gekennzeichnet, daß** eine Abgastemperatur von 600 - 700 °C eingestellt wird.

16. Verfahren nach einem der vorhergehenden Ansprüche, **dadurch gekennzeichnet, daß** die Abgas- oder Katalysatortemperatur durch Einstellung der EGR-Rate und/oder des Ladedruckstellers, und/oder der Nacheinspritzmenge und/oder des Zeitpunktes der Nacheinspritzung und/oder des Spritzbeginns der Haupteinspritzung gesteuert wird.

17. Verfahren nach einem der vorhergehenden Ansprüche, **dadurch gekennzeichnet, daß** die zum Einstellen des De-Sulfatierungszustandes erforderliche Vorbereitungs- oder Aufheizzeit und die zur Durchführung einer De-Sulfatierung erforderliche De-Sulfatierungsdauer bestimmt werden und daß die De-Sulfatierung nach Überschreitung einer vorbestimmten maximal zulässigen Vorbereitungszeit und/oder De-Sulfatierungsdauer unterbrochen oder vorzeitig abgebrochen wird.

18. Verfahren nach Anspruch 17, **dadurch gekennzeichnet, daß** die maximal zulässige De-Sulfatierungsdauer 200 - 300 s beträgt.

19. Verfahren nach Anspruch 17 oder 18, **dadurch gekennzeichnet, daß** die maximal zulässige Vorbereitungszeit zur Durchführung einer De-Sulfatierung 200 - 300 s beträgt.

20. Verfahren nach einem der vorhergehenden Ansprüche, **dadurch gekennzeichnet, daß** innerhalb einer vorbestimmten minimalen Erholungszeit nach einer ordnungsgemäßen Beendigung oder einem vorzeitigen Abbruch bzw. einer Unterbrechung einer De-Sulfatierung keine erneute De-Sulfatierung durchgeführt wird.

21. Verfahren nach Anspruch 20, **dadurch gekennzeichnet, daß** die minimale Erholungszeit in Abhängigkeit von der zur Einstellung des De-Sulfatierungszustandes erforderlichen Vorbereitungszeit und der eigentlichen De-Sulfatierungsdauer variabel gewählt wird.

22. Verfahren nach Anspruch 20 oder 21, **dadurch gekennzeichnet, daß** die minimale Erholungszeit 10 - 170 min beträgt.

23. Verfahren nach Anspruch 22, **dadurch gekennzeichnet, daß** die minimale Erholungszeit 30 - 100 min beträgt.

24. Verfahren nach einem der vorhergehenden Ansprüche, **dadurch gekennzeichnet, daß** die Katalysatortemperatur nach einer Unterbrechung oder einem vorzeitigen Abbruch der De-Sulfatierung durch abschwächende temperaturerhaltende Maßnahmen beibehalten und erst nach Ablauf einer vorbestimmten zweiten Zeitspanne auf normale Betriebswerte abgesenkt wird.

25. Verfahren nach einem der vorhergehenden Ansprüche, **dadurch gekennzeichnet, daß** die Schwefelbeladung des NOx-Speicherkatalysators (24) über den kumulierten Kraftstoffverbrauch sein der letzten De-Sulfatierung bestimmt wird.

26. Verfahren nach einem der vorhergehenden Ansprüche, **dadurch gekennzeichnet, daß** die De-Sulfatierung durch Teilandrosselung der Brennkraftmaschine (10) und/oder Erhöhung der EGR-Rate und/oder Senkung des Ladedrucks und/oder Anhebung der Voreinspritzmenge und/oder Anhebung der Nacheinspritzmenge und/oder Senkung der Haupteinspritzmenge gesteuert wird.

27. Verfahren nach Anspruch 26, **dadurch gekennzeichnet, daß** der Lambda-Wert in einer ersten Stufe durch Teilandrosselung der Brennkraftmaschine (10) und/oder Erhöhung der EGR-Rate und/oder Senkung des Ladedrucks zunächst auf einen vorbestimmten ersten Lambda-Schwellwert abgesenkt und dann in einer zweiten Stufe durch Steuerung der Nacheinspritzung auf den endgültigen Regeneration-Lambda-Wert eingestellt wird.

28. Verfahren nach Anspruch 27, **dadurch gekennzeichnet, daß** der vorbestimmte Lambda-Schwellwert 1,1 - 1,6 beträgt.

29. Verfahren nach Anspruch 28, **dadurch gekennzeichnet, daß** der vorbestimmte Lambda-Schwellwert 1,3 - 1,5 beträgt.

30. Verfahren nach einem der vorhergehenden Ansprüche, **dadurch gekennzeichnet, daß** die Regeneration bei einem Lambda-Wert 0,85 - 1 erfolgt

31. Verfahren nach Anspruch 30, **dadurch gekennzeichnet, daß** der Regenerations-Lambda-Wert 0,95 - 0,995 beträgt.

32. Verfahren nach Anspruch 26 oder 27, **dadurch gekennzeichnet, daß** die Voreinspritzmenge in einer dritten Stufe auf bis zu 50 % der Haupteinspritzmenge angehoben wird.

33. Verfahren nach Anspruch 22, **dadurch gekennzeichnet, daß** die Voreinspritzmenge auf 5 - 20 % der Haupteinspritzmenge angehoben wird.

34. Verfahren nach einem der vorhergehenden Ansprüche, **dadurch gekennzeichnet, daß** auftretende Momentenänderungen durch Steuerung der Haupteinspritzmenge korrigiert werden.

35. Verfahren nach Anspruch 34, **dadurch gekennzeichnet, daß** die Momentenänderungen erst nach Überschreitung eines bestimmten Schwellenwertes korrigiert werden.

36. Verfahren nach einem der vorgehenden Ansprüche, **dadurch gekennzeichnet, daß** Unregelmäßigkeiten der Katalysatoraktivität durch Bestimmung von NOₓ-Durchbrüchen ermittelt werden.

37. Verfahren nach Anspruch 36, **dadurch gekennzeichnet, daß** die NOₓ-Durchbrüche in einem bestimmten Zeitfenster einen bestimmten Schwellenwert überschreiten müssen.

38. Verfahren nach Anspruch 37, **dadurch gekennzeichnet, daß** der Schwellenwert für mehr als 30 s überschritten werden muß.

39. Verfahren nach Anspruch 37 oder 38, **dadurch gekennzeichnet, daß** der Schwellenwert bis zu einer NOₓ-Rohemission von 10 g/h einer Abweichung von 2 g/h zwischen Istwert und Sollwert entspricht, während er bei höheren NOₓ-Rohemissionen einer Abweichung von 20 % entspricht.

40. Verfahren nach einem der vorhergehenden Ansprüche, **dadurch gekennzeichnet, daß** nach Feststellung einer Unregelmäßigkeit der Katalysatoraktivität zumindest eine vorgezogene NOₓ-Regeneration durchgeführt wird.

41. Verfahren nach Anspruch 40, **dadurch gekennzeichnet, daß** zusätzlich zumindest noch eine De-Sutfatierung durchgeführt und bei Fortbestehen der Unregelmäßigkeit ein Katalysatordefekt signalisiert wird.

42. Verfahren nach Anspruch 41, **dadurch gekennzeichnet, daß** die Anzahl der nach einer vorgezogenen De-Sulfatierung durchgeführten regulären NOₓ-Regenerationen bestimmt und mit einer vorbestimmten Mindestanzahl aufeinanderfolgender NOₓ-Regenerationen verglichen wird und daß beim Auftreten einer erneuten Unregelmäßigkeit der Katalysatoraktivität vor Erreichung dieser Mindestanzahl ein Katalysatordefekt signalisiert wird.

43. Verfahren nach Anspruch 42, **dadurch gekennzeichnet, daß** die Mindestanzahl aufeinanderfolgender regulärer NOx-Regenerationen 10 - 100 beträgt.

44. Verfahren nach Anspruch 43, **dadurch gekennzeichnet, daß** die Mindestanzahl aufeinanderfolgender regulärer NOₓ-Regenerationen 20 beträgt.

45. Common-Rail-Dieselmotor (10), **dadurch gekennzeichnet, daß** vor einem Ansaugkrümmer eine Drosselklappe (14) angeordnet ist, die zur De-Sulfatierung eines nachgeschalteten NOₓ-Speicherkatalysators (24) von einer zugeordneten Steuerungseinrichtung (36) gemäß den Verfahrensansprüchen 1-44 angesteuert wird.

46. , Abgasrelnigungsvorrichtung für eine Brennkraftmaschine (10) zur Durchführung des Verfahrens nach einem der vorhergehenden Verfahrensansprüche mit
- einem NOₓ-Speicherkatalysator (24);
- einer dem NOₓ-Speicherkatalysator (24) vorgeschaltoten Breitbandlambdasonde (26);
- zumindest je einem dem NOₓ-Speicherkatalysator (24) Vorgeschalteten bzw. nachgeschalteten Temperaturfühler (28, 30);
- einem dem NOₓ-Speicherkatalysator (24) nachgeschalteten NOₓ-Sensor (38) ; und
- einer zugeordneten Steuerungseinrichtung (36) die die Messsignale der Breltbandlambdasonde (26), der Temperaturfühler (28, 30) und des NOₓ-Sensors (38) erfasst und die Brennkraftmaschine (10) nach einem der Verfahren des Ansprüche 1-44 steuert.

## Claims

1. Method for desulphatizing an NOₓ storage catalyst (24) arranged downstream of an internal combustion engine (10) operated on a lean mixture, having the following method steps:
a.) determination of the state of loading of the NOₓ storage catalyst (24) with sulphur and comparison of the values for loading which have been determined with a predetermined first threshold value for a maximum permissible sulphur loading;
b.) on-board diagnosis of the NOₓ storage catalyst (24) for the purpose of monitoring catalyst activity;
c.) checking the permissibility of desulphatization, when the threshold value is exceeded or an irregularity in catalyst activity is detected, by checking the correct functioning of components relevant to safety and checking the current driving situation for compliance with predetermined driving parameters;
d.) checking whether the possibility of carrying out desulphatization is available through compliance with predetermined desulphatization parameters, setting the required desulphatization parameters if appropriate and initiating desulphatization if such a measure is permissible and otherwise repeating method step c.) and/or if appropriate signalling a detected malfunction in one of the components relevant to safety; and
e.) carrying out desulphatization until a predetermined degree of desulphatization has been reached, setting normal operating conditions and returning to method step a.) or prematurely aborting or interrupting desulphatization if the current results of the permissibility check in method step c.) so require, returning to method step a.) or c.) and, if appropriate, signalling a detected malfunction of one of the components relevant to safety.

2. Method according to Claim 1, **characterized in that** the setting of the required desulphatization parameters in method step d.) takes place only after a predetermined first time period has expired and/or at least a second threshold value for the sulphur loading has been exceeded.

3. Method according to Claim 1 or 2, **characterized in that**, after premature abortion or interruption of desulphatization, the state of loading of the NOₓ storage catalyst (24) with sulphur is determined and, if a predetermined degree of desulphatization has not been reached, i.e. if a predetermined sulphur loading is exceeded, renewed desulphatization is initiated by a return to method step c.) while, if the predetermined degree of desulphatization has been reached or exceeded, a return to method step a.) takes place.

4. Method according to Claim 3, **characterized in that** the predetermined degree of desulphatization amounts to less than 5-15% residual loading relative to the state of loading upon initiation of desulphatization.

5. Method according to one of the preceding claims, **characterized in that** a common-rail diesel engine is used as the internal combustion engine (10).

6. Method according to one of the preceding claims, **characterized in that** the injection system and/or the throttle valve (14) and/or the EGR/boosit pressure controller is/are checked as components relevant to safety.

7. Method according to one of the preceding claims, **characterized in that** the driving situation is derived from a threshold value for the pedal-value transmitter PWG and/or the injection quantity and/or the rotational speed and/or an overrun detection signal and/or a brake signal and/or a rotational-speed gradient.

8. Method according to one of the preceding claims, **characterized in that** desulphatization is carried out only if a certain minimum speed is exceeded.

9. Method according to Claim 8, **characterized in that** the minimum speed is 30 km/h.

10. Method according to one of the preceding claims, **characterized in that** desulphatization is carried out only in a certain rotational-speed or load range and in a certain range of load change requests or of the speed of the pedal-value transmitter.

11. Method according to Claim 10, **characterized in that** the rotational-speed range is 1200 - 3600 rpm, while the maximum speed of the pedal-value transmitter is < 100 %/s.

12. Method according to one of the preceding claims, **characterized in that** desulphatization is carried out only if the injection quantity is 10-90% of the maximum value.

13. Method according to one of the preceding claims, **characterized in that** compliance with the required desulphatization temperature is monitored by determining the exhaust-gas temperature upstream and/or downstream of the NOₓ storage catalyst (24).

14. Method according to one of the preceding claims, **characterized in that** an exhaust-gas temperature of 500-850° C is set in order to carry out desulphatization.

15. Method according to Claim 14, **characterized in that** an exhaust-gas temperature of 600 - 700° C is set.

16. Method according to one of the preceding claims, **characterized in that** the exhaust-gas or catalyst temperature is controlled by adjusting the EGR rate and/or the boost pressure controller and/or the afterinjection quantity and/or the time of afterinjection and/or the start of the main injection.

17. Method according to one of the preceding claims, **characterized in that** the preparation or heating time required to establish the desulphatization condition and the desulphatization period required to carry out desulphatization are determined and **in that** desulphatization is interrupted or prematurely aborted once a predetermined maximum permissible preparation time and/or desulphatization period is exceeded.

18. Method according to Claim 17, **characterized in that** the maximum permissible desulphatization period is 200 - 300 s.

19. Method according to Claim 17 or 18, **characterized in that** the maximum permissible preparation time for carrying out desulphatization is 200 - 300 s.

20. Method according to one of the preceding claims, **characterized in that** desulphatization is not carried out again within a predetermined minimum recovery time following proper completion or premature abortion or interruption of desulphatization.

21. Method according to Claim 20, **characterized in that** the minimum recovery time is varied as a function of the preparation time required to establish the desulphatization condition and of the actual desulphatization period.

22. Method according to Claim 20 or 21, **characterized in that** the minimum recovery time is 10 - 170 minutes.

23. Method according to Claim 22, **characterized in that** the minimum recovery time is 30 - 100 minutes.

24. Method according to one of the preceding claims, **characterized in that** the catalyst temperature is maintained after an interruption or premature abortion of desulphatization by attenuating temperature-maintaining measures and is lowered to normal operating values only after the expiry of a predetermined second period.

25. Method according to one of the preceding claims, **characterized in that** the sulphur loading of the NOₓ storage catalyst (24) is determined by way of the cumulative fuel consumption since the last desulphatization.

26. Method according to one of the preceding claims, **characterized in that** desulphatization is controlled by partial throttling of the internal combustion engine (10) and/or increasing the EGR rate and/or lowering the boost pressure and/or raising the pilot injection quantity and/or raising the afterinjection quantity and/or lowering the main injection quantity.

27. Method according to Claim 26, **characterized in that** the lambda value is lowered initially to a predetermined first lambda threshold value in a first stage by partial throttling of the internal combustion engine (10) and/or increasing the EGR rate and/or lowering the boost pressure and is then set to the final regeneration lambda value in a second stage by controlling the afterinjection.

28. Method according to Claim 27, **characterized in that** the predetermined lambda threshold value is 1.1 - 1.6.

29. Method according to Claim 28, **characterized in that** the predetermined lambda threshold value is 1.3 - 1.5.

30. Method according to one of the preceding claims, **characterized in that** regeneration takes place at a lambda value of 0.85 - 1.

31. Method according to Claim 30, **characterized in that** the regeneration lambda value is 0.95 - 0.995.

32. Method according to Claim 26 or 27, **characterized in that** the pilot injection quantity is raised in a third stage to up to 50% of the main injection quantity.

33. Method according to Claim 22, **characterized in that** the pilot injection quantity is raised to 5 - 20% of the main injection quantity.

34. Method according to one of the preceding claims, **characterized in that** changes in torque that occur are corrected by controlling the main injection quantity.

35. Method according to Claim 34, **characterized in that** the changes in torque are corrected only after a certain threshold value is exceeded.

36. Method according to one of the preceding claims, **characterized in that** irregularities in catalyst activity are determined by determining NOₓ breakthroughs.

37. Method according to Claim 36, **characterized in that** the NOₓ breakthroughs must exceed a certain threshold value in a certain time window.

38. Method according to Claim 37, **characterized in that** the threshold value must be exceeded for more than 30 s.

39. Method according to Claim 37 or 38, **characterized in that** the threshold value corresponds to a deviation of 2 g/h between the actual value and the desired value up to an untreated NOₓ emission level of 10 g/h while it corresponds to a deviation of 20% at higher untreated NOₓ emission levels.

40. Method according to one of the preceding claims, **characterized in that** at least one advanced NOₓ regeneration is carried out after an irregularity in catalyst activity is detected.

41. Method according to Claim 40, **characterized in that** at least one desulphatization is carried out in addition and a catalyst defect is signalled if the irregularity persists.

42. Method according to Claim 41, **characterized in that** the number of regular NOₓ regenerations that is carried out after an advanced desulphatization is determined and compared with a predetermined minimum number of successive NOₓ regenerations, and **in that** a catalyst defect is signalled if another irregularity in the catalyst activity occurs before this minimum number is reached.

43. Method according to Claim 42, **characterized in that** the minimum number of successive regular NOₓ regenerations is 10 - 100.

44. Method according to Claim 43, **characterized in that** the minimum number of successive regular NOₓ regenerations is 20.

45. Common-rail diesel engine (10), **characterized in that** a throttle valve (14) is arranged upstream of an intake manifold and, to desulphatize a downstream NOₓ storage catalyst (24) in accordance with method claims 1 - 44, this throttle valve is activated by an associated control device (36).

46. Exhaust-gas purification device for an internal combustion engine (10) for carrying out the method in accordance with one of the preceding method claims, having:
- an NOₓ storage catalyst (24);
- a broad-band lambda sensor (26) arranged upstream of the NOₓ storage catalyst (24);
- at least one temperature detector (28) arranged upstream of the NOₓ storage catalyst (24) and at least one (30) arranged downstream of it;
- an NOₓ sensor (38) arranged downstream of the NOₓ storage catalyst (24); and
- an associated control device (36), which detects the measurement signals of the broad-band lambda sensor (26), the temperature detectors (28, 30) and the NOₓ sensor (38) and controls the internal combustion engine (10) in accordance with one of the methods of Claims 1 - 44.

## Revendications

1. Procédé de désulfuration d'un catalyseur à accumulation de NOₓ (24) branché en aval d'un moteur à combustion interne (10) fonctionnant en conditions pauvres, **caractérisé par** les étapes de procédé suivantes:
a.) détermination de l'état de charge en soufre du catalyseur à accumulation de NOₓ (24) et comparaison des valeurs de charge déterminées à une première valeur de seuil prédéterminée d'une charge maximale admissible en soufre;
b.) contrôle par le diagnostic embarqué (OBD - "On Board Diagnostic") du catalyseur à accumulation de NOₓ (24) pour la surveillance de l'activité du catalyseur;
c.) en cas de dépassement de la valeur de seuil ou de constatation d'une irrégularité de l'activité du catalyseur, vérification de l'opportunité d'une désulfuration en vérifiant si le mode de fonctionnement de composants concernés par la sécurité est correct et en vérifiant si des paramètres de roulage prédéterminés sont respectés dans la situation de roulage actuelle;
d.) vérification s'il existe une possibilité de réaliser une désulfuration en respectant des paramètres prédéterminés de désulfuration, éventuellement avec réglage des paramètres nécessaires pour la désulfuration et lancement de la désulfuration si une telle disposition est opportune, sinon, répétition de l'étape de procédé
c.) et/ou éventuellement signalisation de la constatation des perturbations du fonctionnement d'un des composants concernés par la sécurité; et
e.) exécution de la désulfuration jusqu'à l'obtention d'un degré prédéterminé de désulfuration, réglage des conditions normales de fonctionnement et retour à l'étape de procédé a.), ou arrêt précoce ou interruption de la désulfuration au cas où les résultats actuels de la vérification de l'opportunité de l'étape de procédé c.) l'exigent, retour à l'étape de procédé a.) ou c.) et éventuellement signalisation de la constatation d'une perturbation du fonctionnement d'un des composants concernés par la sécurité.

2. Procédé selon la revendication 1, **caractérisé en ce que** le réglage des paramètres nécessaires pour la désulfuration dans l'étape de procédé d.) ne s'effectue qu'après déroulement d'un premier laps de temps prédéterminé et/ou après dépassement d'au moins une deuxième valeur de seuil de la charge en soufre.

3. Procédé selon la revendication 1 ou 2, **caractérisé en ce qu'**après l'arrêt précoce ou l'interruption de la désulfuration, l'état de charge du catalyseur à accumulation de NOₓ (24) en soufre est déterminée, et si un premier taux de désulfuration prédéterminé n'est pas atteint, c'est-à-dire si une charge en soufre prédéterminée est dépassée, initialisation d'une nouvelle désulfuration après retour à l'étape de procédé c.), tandis que si le taux de désulfuration prédéterminé est atteint ou dépassé, on retourne à l'étape de procédé a.)

4. Procédé selon la revendication 3, **caractérisé en ce que** le taux prédéterminé de désulfuration est inférieur à 5 - 15 % de charge résiduelle, calculé par rapport à l'état de charge lors du lancement de la désulfuration.

5. Procédé selon l'une des revendications précédentes, **caractérisé en ce que** comme machine à combustion interne (10), on utilise un moteur diesel à rampe d'injection commune.

6. Procédé selon l'une des revendications précédentes, **caractérisé en ce que** comme composants concernés par la sécurité, on vérifie le système d'injection et/ou le clapet d'étranglement (14) et/ou le turbocompresseur de recyclage des gaz d'échappement (EGR - "Exhaust Gas Recycling").

7. Procédé selon l'une des revendications précédentes, **caractérisé en ce que** la situation de roulage est déduite d'une valeur de seuil de l'émetteur de pédale PWG et/ou de la quantité injectée et/ou de la vitesse de rotation et/ou d'un signal de détection de glissement et/ou d'un signal de freinage et/ou d'un gradient de vitesse de rotation.

8. Procédé selon l'une des revendications précédentes, **caractérisé en ce qu'**une désulfuration n'est exécutée qu'en cas de dépassement d'une vitesse minimale définie.

9. Procédé selon la revendication 8, **caractérisé en ce que** la vitesse minimale est de 30 km/]h.

10. Procédé selon l'une des revendications précédentes, **caractérisé en ce qu'**une désulfuration n'est exécutée que dans une plage définie de vitesse de rotation ou de charge et dans une plage définie de souhait de modification de la charge ou de la vitesse du PWG.

11. Procédé selon la revendication 10, **caractérisé en ce que** la plage de vitesse de rotation est de 1 200 à 3 600 tours/min., tandis que la vitesse maximale du PWG est < 100 %/s.

12. Procédé selon l'une des revendications précédentes, **caractérisé en ce qu'**une désulfuration n'est réalisée que si la quantité injectée représente de 10 à 90 % de la valeur maximale.

13. Procédé selon l'une des revendications précédentes, **caractérisé en ce que** le respect de la température nécessaire de désulfuration est surveillée par détermination de la température des gaz d'échappement en amont et/ou en aval du catalyseur à accumulation de NOₓ (24).

14. Procédé selon l'une des revendications précédentes, **caractérisé en ce que** pour réaliser une désulfuration, on règle une température des gaz d'échappement de 500 à 850° C.

15. Procédé selon la revendication 14, **caractérisé en ce qu'**on règle une température des gaz d'échappement de 600 à 700° C.

16. Procédé selon l'une des revendications précédentes, **caractérisé en ce que** la température des gaz d'échappement ou du catalyseur est commandée par réglage du taux de recyclage des gaz d'échappement (EGR) et/ou du turbocompressseur et/ou de la quantité d'injection secondaire et/ou de l'instant de l'injection secondaire et/ou du début d'injection de l'injection principale.

17. Procédé selon l'une des revendications précédentes, **caractérisé en ce que** la durée de préparation ou de chauffage nécessaire pour le réglage de la situation de désulfuration et pour l'exécution d'une durée de désulfuration nécessaire pour la désulfuration sont déterminées et **en ce qu'**après dépassement d'un instant de préparation et/ou d'une durée de désulfuration maximale admissible, la désulfuration est interrompue ou arrêtée précocement.

18. Procédé selon la revendication 17, **caractérisé en ce que** la durée maximale admissible de désulfuration est de 200 à 300 s.

19. Procédé selon la revendication 17 ou 18, **caractérisé en ce que** la durée maximale admissible de préparation de l'exécution d'une désulfuration est de 200 à 300 s.

20. Procédé selon l'une des revendications précédentes, **caractérisé en ce qu'**aucune nouvelle désulfuration n'est exécutée dans une durée prédéterminée minimale de répétition après qu'une désulfuration s'est terminée correctement ou a été arrêtée précocement ou interrompue.

21. Procédé selon la revendication 20, **caractérisé en ce que** la durée minimale de répétition est sélectionnée de manière variable en fonction de la durée de préparation nécessaire pour régler l'état de désulfuration et de la durée de la désulfuration proprement dite.

22. Procédé selon la revendication 20 ou 21, **caractérisé en ce que** la durée minimale de répétition est de 10 à 170 min.

23. Procédé selon la revendication 22, **caractérisé en ce que** la durée minimale de répétition est de 30 à 100 min.

24. Procédé selon l'une des revendications précédentes, **caractérisé en ce que** la température du catalyseur est maintenue après une interruption ou un arrêt précoce de la désulfuration, par des dispositions d'atténuation qui maintiennent la température, et n'est abaissée aux valeurs normales de fonctionnement qu'après écoulement d'un deuxième laps de temps prédéterminé.

25. Procédé selon l'une des revendications précédentes, **caractérisé en ce que** la charge en soufre du catalyseur à accumulation de NOₓ (24) est déterminée par l'intermédiaire de la consommation cumulée en carburant depuis la dernière désulfuration.

26. Procédé selon l'une des revendications précédentes, **caractérisé en ce que** la désulfuration est commandée par un étranglement partiel du moteur à combustion interne (10) et/ou augmentation du taux de recyclage des gaz d'échappement (EGR) et/ou abaissement de la pression de suralimentation et/ou relèvement de la quantité de pré-injection et/ou relèvement de la quantité d'injection secondaire et/ou abaissement de la quantité d'injection principale.

27. Procédé selon la revendication 26, **caractérisé en ce que** la valeur de lambda est d'abord abaissée à une première valeur de seuil de lambda prédéterminée par étranglement partiel du moteur à combustion interne (10) et/ou augmentation du taux de recyclage des gaz d'échappement (EGR) et/ou abaissement de la pression de suralimentation, et ensuite, dans une deuxième étape, est réglée à la valeur de lambda finale de la régénération par commande de l'injection secondaire.

28. Procédé selon la revendication 27, **caractérisé en ce que** la valeur de seuil prédéterminée de lambda est de 1,1 à 1,6.

29. Procédé selon la revendication 28, **caractérisé en ce que** la valeur de seuil prédéterminée de lambda est de 1,3 à 1,5.

30. Procédé selon l'une des revendications précédentes, **caractérisé en ce que** la régénération s'effectue à une valeur de lambda de 0,85 à 1.

31. Procédé selon la revendication 30, **caractérisé en ce que** la valeur de lambda de la régénération est de 0,95 à 0,995.

32. Procédé selon la revendication 26 ou 27, **caractérisé en ce que** la quantité pré-injectée est relevée jusqu'à 50 % de la quantité de l'injection principale dans une troisième étape.

33. Procédé selon la revendication 22, **caractérisé en ce que** la quantité pré-injectée est relevée à 5 - 20 % de la quantité de l'injection principale.

34. Procédé selon l'une des revendications précédentes, **caractérisé en ce que** d'éventuelles variations du couple sont corrigées par commande de la quantité de l'injection principale.

35. Procédé selon la revendication 34, **caractérisé en ce que** les variations de couple ne sont corrigées qu'après dépassement d'une valeur de seuil définie.

36. Procédé selon l'une des revendications précédentes, **caractérisé en ce que** des irrégularités de l'activité du catalyseur sont détectées par détermination des émissions de NOₓ.

37. Procédé selon la revendication 36, **caractérisé en ce que** les émissions de NOₓ doivent dépasser une valeur de seuil définie à l'intérieur d'une fenêtre temporelle définie.

38. Procédé selon la revendication 37, **caractérisé en ce que** la valeur de seuil doit être dépassée pendant plus de 30 s.

39. Procédé selon la revendication 37 ou 38,
**caractérisé en ce que** jusqu'à une émission brute de NOₓ de 10 g/h, la valeur de seuil correspond à un écart de 2 g/h entre la valeur effective et la valeur de consigne, tandis que pour des émissions brutes de NOₓ plus élevées, elle correspond à un écart de 20 %.

40. Procédé selon l'une des revendications précédentes, **caractérisé en ce qu'**après constatation d'une irrégularité de l'activité du catalyseur, on effectue au moins une régénération précoce du NOₓ.

41. Procédé selon la revendication 40, **caractérisé en ce qu'**en supplément, on exécute encore au moins une désulfuration, et en cas de maintien des irrégularités, un défaut de catalyseur est signalé.

42. Procédé selon la revendication 41, **caractérisé en ce que** le nombre des régénérations NOₓ régulières exécutées après une désulfuration précoce est déterminé et est comparé à un nombre minimum prédéterminé de régénérations de NOₓ successives, et en cas d'apparition d'une nouvelle irrégularité de l'activité du catalyseur avant l'atteinte de ce nombre minimum, un défaut de catalyseur est signalé.

43. Procédé selon la revendication 42, **caractérisé en ce que** le nombre minimum de régénérations de NOₓ régulières successives est de 10 à 100.

44. Procédé selon la revendication 43, **caractérisé en ce que** le nombre minimum de régénérations de NOₓ régulières successives est de 20.

45. Moteur diesel (10) à rampe d'injection commune, **caractérisé en ce qu'**en amont d'un coude d'aspiration est disposé un clapet d'étranglement (14) qui est commandé pour la désulfuration d'un catalyseur à accumulation de NOₓ (24) branché en aval, par un dispositif de commande (36) associé selon les revendications 1 à 44.

46. Dispositif d'épuration de gaz d'échappement pour un moteur à combustion interne (10) en vue de la réalisation du procédé selon l'une des revendications précédentes concernant le procédé, comprenant:
- un catalyseur à accumulation de NOₓ (24);
- une sonde lambda à large bande (26) branchée en amont du catalyseur à accumulation de NOₓ (24);
- au moins une sonde de température (28, 30) branchée chaque fois en amont et en aval du catalyseur à accumulation de NOₓ (24);
- un capteur de NOₓ (38) branché en aval du catalyseur à accumulation de NOₓ (24); et
- un dispositif de commande associé (36), qui saisit les signaux de mesures de la sonde lambda à large bande (26), des sondes de température (28, 30) et du capteur de NOₓ (38) et qui commande la machine à combustion interne (10) par l'un des procédés selon les revendications 1 à 44.
